# EUROPÄISCHE PATENTSCHRIFT

(11) **EP 1 350 248 B1**
(45) Veröffentlichungstag und Bekanntmachung des Hinweises auf die Patenterteilung: **15.09.2004**
(21) Anmeldenummer: 01989593.7
(22) Anmeldetag: 13.12.2001
(51) Int. Cl.: G11B 7/26, B29C 65/00, B29C 65/48

(54) **VERFAHREN UND VORRICHTUNG ZUM ZUSAMMENFÜGEN VON SUBSTRATEN**
METHOD AND DEVICE FOR ASSEMBLING SUBSTRATES
PROCEDE ET DISPOSITIF POUR L'ASSEMBLAGE DE SUBSTRATS

(30) Priorität: 08.01.2001 DE 10100427
(43) Veröffentlichungstag der Anmeldung: 08.10.2003
(73) Patentinhaber: Steag HamaTech AG, 75447 Sternenfels (DE)
(72) Erfinder: SPEER, Ulrich, 75239 Eisingen (DE); WAGNER, Roland, 75015 Bretten (DE); LEONHARDT, Stephan, 75015 Bretten (DE)
(74) Vertreter: Wagner & Geyer
(86) Internationale Anmeldenummer: PCT/EP2001/014662
(87) Internationale Veröffentlichungsnummer: WO 2002/054398

(56) Entgegenhaltungen:
- EP-A- 0 449 227
- EP-A- 0 463 392
- EP-A- 1 029 942
- DE-A- 19 927 514

## Beschreibung

Die vorliegende Erfindung bezieht sich auf ein Verfahren und eine Vorrichtung zum Zusammenfügen von wenigstens zwei Substraten zu einem Datenträger.

Als Datenträger sind beispielsweise CD's, DVD's, DVR's, FMD's usw. bekannt, die aus wenigstens zwei miteinander verklebten Substraten bestehen.

Bei einer bekannten Vorrichtung zur Herstellung derartiger Datenträger, wie sie beispielweise aus der auf dieselbe Anmelderin zurückgehenden DE-A-100 29 400 bekannt ist, werden die Substrate mittels einer zweiseitig klebenden Klebefolie miteinander verklebt. In einer Laminierstation wird die zweiseitig klebende Klebefolie auf ein erstes der Substrate aufgebracht und anschließend wird das laminierte Substrat auf einer Aufnahmeeinheit mit einem Zentrier- und Haltestift abgelegt. Ein zweites Substrat wird ebenfalls auf der Aufnahmeeinheit abgelegt, wobei die beiden Substrate durch den Zentrier- und Haltestift beabstandet voneinander gehalten werden. Anschließend wird die Aufnahmeeinheit in eine Zusammenfügstation mit einer Haube bewegt, die in Kontakt mit der Aufnahmeeinheit bewegt wird, um eine geschlossene Kammer dazwischen zu bilden. In dieser Position wird die Kammer über eine nicht näher dargestellte Vorrichtung abgepumpt, um beim nachfolgenden Zusammenfügen der Substrate einen Lufteinschluß dazwischen zu verhindern. Wenn ein bestimmter Unterdruck in der Kammer erreicht ist, wird ein in der Kammer bewegbar angeordneter Stempel bewegt, um die Substrate zusammenzudrücken.

Bei diesem Verfahren ist es notwendig, die Kammer vor dem Zusammenfügen der Substrate von Umgebungsdruck auf einen gewünschten Unterdruck zu pumpen, wodurch sich relativ lange Zykluszeiten für das Zusammenfügen der Substrate ergeben.

DE-A-199 27 514 beschreibt ein Verfahren bzw. eine Vorrichtung zum Zusammenfügen von zwei Substraten in einer Unterdruckkammer mit einer Öffnung zum Ein/Ausgeben von Substraten.

Ausgehend von diesem Stand der Technik liegt daher der vorliegenden Erfindung die Aufgabe zugrunde, ein Verfahren und eine Vorrichtung zum Zusammenfügen von wenigstens zwei Substraten zum Bilden eines optischen Datenträgers zu schaffen, bei dem bzw. bei der die Zykluszeiten für das Zusammenfügen verkürzt werden können.

Erfindungsgemäß wird diese Aufgabe bei einem Verfahren zum Zusammenfügen von wenigstens zwei Substraten zu einem Datenträger, in einer Unterdruckkammer, die wenigstens einer Öffnung zum Eingeben und/oder Ausgeben von Substraten aufweist, mit den Verfahrensschritten gemäß Anspruch 1 gelöst.

Bei dem erfindungsgemäßen verfahren wird die Unterdruckkammer anfangs auf einen gewünschten Unterdruck gebracht, der während und zwischen aufeinanderfolgenden Zusammenfügvorgängen im wesentlichen konstant gehalten wird. Das jeweilige Abpumpen der Zusammenfügstation für jeden einzelnen Zusammenfügvorgang kann entfallen, wodurch die Zykluszeiten erheblich reduziert werden. Der Unterdruck in der Unterdruckkammer lässt sich konstant halten, da die Übergabekammer zwischen der ersten und zweiten Handhabungsvorrichtung ein wesentlich kleineres Volumen als das Volumen der Unterdruckkammer aufweist, und somit beim Öffnen der Übergabekammer zu der Unterdruckkammer nur geringe Druckschwankungen auftreten. Ferner wird Öffnung der Unterdruckkammer zu jedem Zeitpunkt durch die erste und/oder zweite Handhabungsvorrichtung gegen die Umgebung abgedichtet, so daß Druckschwankungen ausschließlich beim Öffnen der Übergabekammer auftreten.

Gemäß einer bevorzugten Ausführungsform der Erfindung wird die Übergabekammer vor und/oder während der Substratübergabe abgepumpt, um die Druckschwankungen in der Unterdruckkammer noch weiter zu verringern. Dabei ist es nicht notwendig, daß der Druck in der Übergabekammer auf den Druck in der Unterdruckkammer abgesenkt wird, vielmehr wird der Druck in der Übergabekammer auf einen Druck abgepumpt, der zwischen dem Umgebungsdruck und dem Druck in der Unterdruckkammer liegt. Das Abpumpen der Übergabekammer wird vorzugsweise auf den Zeitraum begrenzt, der für die Substratübergabe zwischen den Handhabungsvorrichtungen notwendig ist, um eine Optimierung der Zykluszeiten zu erreichen.

Um eine gleichzeitige Übergabe von Substraten an der Öffnung und ein Zusammenfügen weiterer Substrate in der Zusammenfügstation zu ermöglichen, weist die erste Handhabungsvorrichtung vorzugsweise wenigstens zwei Aufnahmen auf, die derart gesteuert werden, daß eine Aufnahme die Substrate beim Zusammenfügen trägt, während die andere Aufnahme die Öffnung der Unterdruckkammer abdichtet.

Vorzugsweise wird die erste Handhabungsvorrichtung zum Bilden einer Fügekammer mit der Zusammenfügstation in Kontakt gebracht. Die Fügekammer wird vorzugsweise auf einen Druck abgepumpt, der unter dem Druck in der Unterdruckkammer liegt. Hierdurch ist es nicht notwendig, die Unterdruckkammer auf den für den Fügevorgang erforderlichen Unterdruck abzupumpen, vielmehr reicht es aus, die Kammer auf einen Druck zwischen dem Umgebungsdruck und dem für den Fügevorgang erforderlichen Unterdruck zu bringen. Da die Unterdruckkammer schon auf einen Unterdruck gebracht ist, können die erforderlichen Abpumpzeiten für die Fügekammer gegenüber dem Stand der Technik wesentlich reduziert werden, bei dem die Fügekammer jeweils vom Umgebungsdruck auf den für den Fügevorgang erforderlichen Unterdruck gebracht werden muß.

Erfindungsgemäß wird die Aufgabe auch durch eine Vorrichtung zum Zusammenfügen von wenigstens zwei Substraten zu einem Datenträgers gemäß Anspruch 3 gelöst.

Vorzugsweise bilden die Handhabungsvorrichtungen in ihren abdichtenden Positionen eine im wesentlichen geschlossene Übergabekammer mit einem Volumen, das kleiner ist als das Volumen der Unterdruckkammer, so daß beim Öffnen der Übergabekammer zur Unterdruckkammer nur geringe Druckschwankungen auftreten. Um die Druckschwankungen noch weiter zu reduzieren, ist eine Vorrichtung zum Abpumpen der Übergabekammer vorgesehen.

Um ein gleichzeitiges Zusammenfügen von Substraten und ein Ein- und Ausgeben weiterer Substrate in die Kammer bzw. aus dieser heraus zu ermöglichen, weist die erste Handhabungsvorrichtung wenigstens zwei Substrataufnahmen auf. Vorzugsweise wiesen die Substrataufnahmen jeweils ein Gehäuse mit U-förmigem Querschnitt auf, um eine gute Kammerbildung mit der zweiten Handhabungsvorrichtung zu ermöglichen. Für eine gute Kammerbildung weist vorzugsweise auch die zweite Handhabungsvorrichtung ein Gehäuse mit U-förmigem Querschnitt, sowie einen bewegbaren Substratträger auf.

Um zu verhindern, daß die Substrate unbeabsichtigt in Kontakt kommen, tragen die ersten und zweiten Handhabungsvorrichtungen die Substrate vor ihrem Zusammenfügen beabstandet.

Vorzugsweise ist die erste Handhabungsvorrichtung zum Bilden einer Fügekammer in Kontakt mit der Zusammenfügstation bewegbar. Vorteilhafterweise ist ferner eine Vorrichtung zum Abpumpen der Fügekammer vorgesehen.

Bei einer alternativen Ausführungsform der Erfindung weist die Vorrichtung wenigstens eine weitere Öffnung zum Ein- und/oder Ausgeben von Substraten auf, wobei die erste Handhabungsvorrichtung in eine die weitere Öffnung abdichtende Position bewegbar ist, und wenigstens drei Substrataufnahmen aufweist, und wobei wenigstens eine dritte Handhabungsvorrichtung zum Tragen und Transportieren der Substrate außerhalb der Unterdruckkammer vorgesehen ist, die in eine die weitere Öffnung abdichtende Position bewegbar ist. Durch die zweite Öffnung können gleichzeitig Substrate in die Unterdruckkammer Ein- und Ausgegeben werden, wodurch die Zykluszeiten noch weiter verringert werden können.

Die Erfindung wird nachstehend anhand bevorzugter Ausführungsbeispiele unter Bezugnahme auf die Figuren näher erläutert. Es zeigen:
- Fig. 1A bis C: eine schematische Darstellung einer erfindungsgemäßen Vorrichtung zum Zusammenfügen von Datenträgern, sowie einen Prozeßzyklus für das Zusammenfügen der Substrate;
- Fig. 2: eine schematische Schnittansicht einer durch erste und zweite Handhabungsvorrichtungen gebildete Übergabekammer;
- Fig. 3: eine schematische Schnittdarstellung einer Zusammenfügstation.

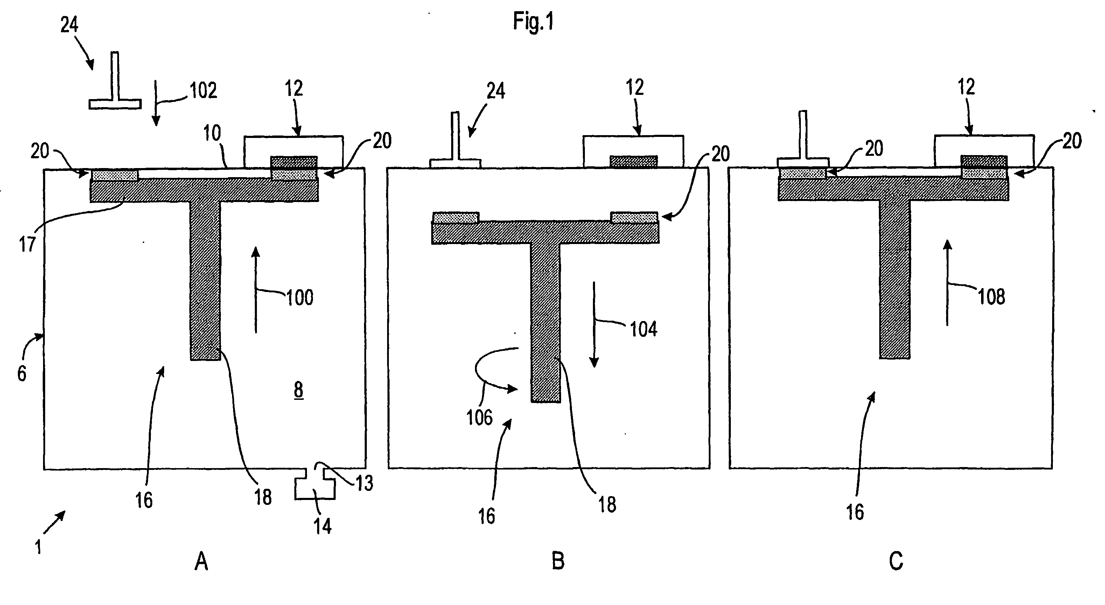

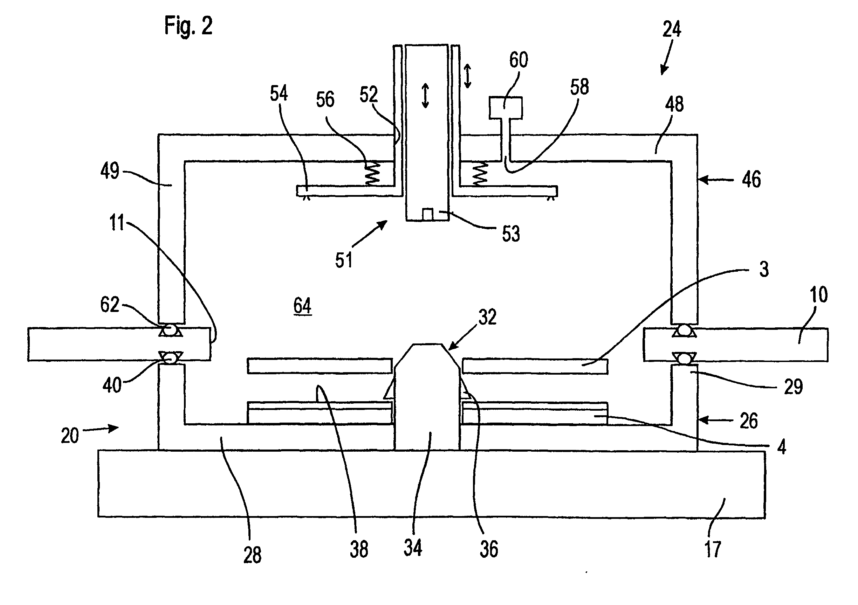

Die Figuren 1A bis C zeigen schematisch eine erfindungsgemäße Vorrichtung 1 zum Zusammenfügen von Substraten 3, 4, die in Fig. 2 zu erkennen sind.

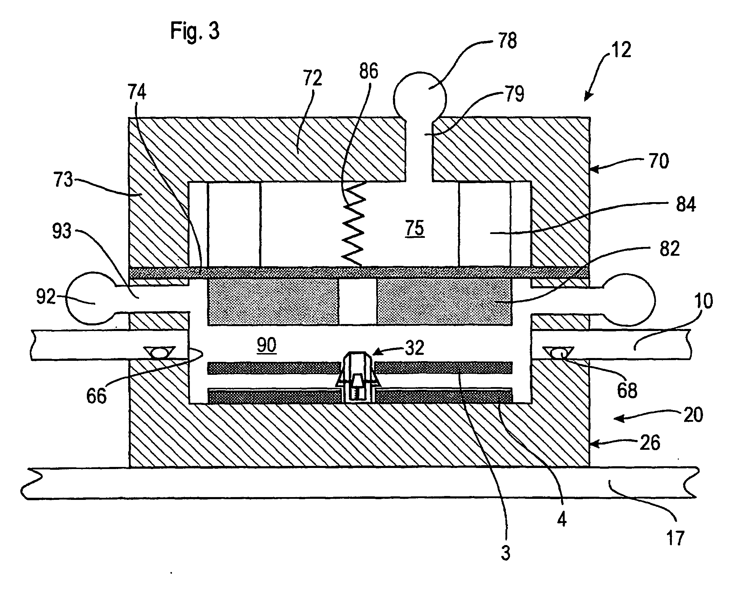

Die Vorrichtung 1 weist ein Gehäuse 6 auf, das im Inneren eine Unterdruckkammer 8 bildet. Das Gehäuse 6 weist in einer oberen Wand eine Durchgangsöffnung 11 auf, wie am besten in Fig. 2 zu erkennen ist. An der oberen Wand 10 ist ferner eine Zusammenfügstation 12 vorgesehen, die nachfolgend unter Bezugnahme auf Fig. 3 noch näher beschrieben wird.

Im Boden des Gehäuses 6 ist eine Absaugleitung 13 vorgesehen, die mit einer Absaugvorrichtung 14, wie beispielsweise einer Vakuumpumpe, verbunden ist, um ein Abpumpen der Unterdruckkammer 8 auf einen vorgegebenen Wert zu ermöglichen.

In der Unterdruckkammer 8 ist eine erste Handhabungsvorrichtung 16 in der Form eines Drehtischs vorgesehen. Der Drehtisch 16 weist eine sich im wesentlichen horizontal erstreckende Platte 17 sowie eine sich senkrecht hierzu erstreckende Drehwelle 18 auf. Die Platte 17 erstreckt sich parallel zur oberen Wand 10 des Gehäuses und ist über die Welle 18 auf diese zu und von dieser weg bewegbar. Darüber hinaus ist die Platte 17 um die Drehachse der Welle 18 drehbar.

Auf der Platte 17 sind zwei zur oberen Wand 10 des Gehäuses 6 weisende Substrataufnahmen 20 vorgesehen, die denselben Aufbau besitzen, und nachfolgend unter Bezugnahme auf Fig. 2 noch näher beschrieben werden.

Oberhalb der oberen Wand 10 des Gehäuses 6 ist eine zweite Handhabungsvorrichtung 24 vorgesehen, die zum An- und Abtransport von Substraten geeignet ist. Die Handhabungsvorrichtung 24 weist geeignete Bewegungsachsen zum Transport der Substrate auf und ist von außen gegen die obere Wand 10 des Gehäuses 6 bewegbar, um die Öffnung 11 in der oberen Wand 10 des Gehäuses 6 gegenüber der Umgebung abzudichten, wie nachfolgend unter Bezugnahme auf Fig. 2 noch näher beschrieben wird.

Anhand der Fig. 2 wird nunmehr der nähere Aufbau einer der Substrataufnahmen 20, sowie der zweiten Handhabungsvorrichtung 24 beschrieben.

In Fig. 2 ist eine Substrataufnahme 20 der Handhabungsvorrichtung 16 zu erkennen, die auf der Platte 17 des Drehtischs angeordnet ist. Die Substrataufnahme 20 weist ein Gehäuse 26 mit im wesentlichen U-förmigem Querschnitt auf, das in geeigneter Weise an der Platte 17 angebracht ist. Natürlich kann das Gehäuse 26 auch einteilig mit der Platte 17 ausgebildet sein. Das Gehäuse 26 weist eine Bodenwand 28, sowie eine umlaufende Seitenwand 29 auf.

In der Bodenwand 28 ist ein Zentrier- und Haltestift 32 aufgenommen, der geeignet ist, die Substrate 3, 4 zu zentrieren und beabstandet voneinander zu halten. Der Zentrier- und Aufnahmestift besitzt beispielsweise einen Aufbau, wie er aus der auf dieselbe Anmelderin zurückgehenden DE-A-199 27 514 bekannt ist, auf die insofern Bezug genommen wird, um Wiederholungen zu vermeiden. Der Zentrier- und Haltestift 32 weist einen mittleren Stiftteil 34 auf, dessen Außenumfang den Innenlöchern der Substrate 3, 4 angepaßt ist. An dem Stiftteil sind radial zum Stift bewegbare Nasen 36 vorgesehen, auf denen die Substrate aufliegen können. Über einen nicht näher dargestellten Bewegungsmechanismus sind die Nasen 36 radial zum Stift hin bewegbar, so daß sich die Substrate 3, 4 an dem Stift entlang nach unten bewegen können. Aufgrund der geraden Außenflächen der Nasen 36 werden die Substrate 3, 4 bei dieser Bewegung genau zentriert geführt. In Fig. 2 ist zu erkennen, daß ein erstes Substrat 4 an den Nasen 36 des Zentrier- und Haltestifts 32 vorbei bewegt ist, und auf der Bodenwand 28 des Gehäuse 26 aufliegt. Ein zweites Substrat 3 liegt auf den Nasen 36 auf, und wird hierdurch parallel und beabstandet zu dem unteren Substrat 4 gehalten.

Natürlich könnte die Substrataufnahme 20 statt des Zentrier- und Haltestifts 32 auch einen anderen geeigneten Mechanismus aufweisen, der in der Lage ist, die Substrate 3, 4 aufzunehmen und beabstandet voneinander zu halten, wie beispielsweise einen Stift mit beweglichen Kugeln, mit Federringen oder ähnlichem.

Wie in Fig. 2 zu erkennen ist, ist auf dem unteren Substrat 4 eine zweiseitig klebende Klebefolie 38 vorgesehen, die zuvor in einer Laminierstation aufgebracht wurde, wie sie beispielsweise aus der auf dieselbe Anmelderin zurückgehenden DE-A-100 29 400 bekannt ist, auf die insofern Bezug genommen wird, um Wiederholungen zu vermeiden.

Die radiale Seitenwand 29 des Gehäuses 26 besitzt Innenabmessungen, die größer sind als die Abmessungen der Öffnung 11 in der oberen Wand 10 des Gehäuses 6. Dies ermöglicht ein Abdichten der Öffnung 11 von der Seite der Unterdruckkammer 8 her, wenn die Seitenwand 29 in Kontakt mit der oberen Wand 10 des Gehäuses 6 bewegt wird. Um eine gute Abdichtung zu gewährleisten, ist in der oberen Wand 10 des Gehäuses 6 eine Dichtung 40, wie beispielsweise ein O-Ring, vorgesehen, der die Öffnung 11 radial umgibt und einen sicheren Dichtkontakt mit einer Stirnseite der Seitenwand 29 des Gehäuses 26 vorsieht. Natürlich kann auch an bzw. in der Stirnseite der Seitenwand 29 ein entsprechendes Dichtelement vorgesehen sein, um eine gute Abdichtung mit der oberen Wand des Gehäuses 6 vorzusehen.

Die Handhabungsvorrichtung 24 weist ebenfalls ein im Querschnitt U-förmiges Gehäuse 46 mit einer oberen Wand 48 und einer umlaufenden Seitenwand 49 auf. Ein Substratträger 51, der in der Lage ist, zwei Substrate unabhängig voneinander aufzunehmen bzw. abzulegen und beabstandet voneinander zu tragen, erstreckt sich durch eine Öffnung 52 in der oberen Wand 48. Der Substratträger 51 weist beispielweise eine Kombination eines Innenlochgreifers 53 und eines Außengreifers 54 in der Form eines Vakuumgreifers auf, wie sie beispielsweise aus der auf dieselbe Anmelderin zurückgehenden DE-A-198 18 479 bekannt ist. Der Innenlochgreifer 53 und der Außengreifer 54 sind über geeignete, nicht dargestellte Bewegungsmechanismen entlang einer sich senkrecht zur oberen Gehäusewand 48 erstreckenden Bewegungsachse relativ zueinander und relativ zum Gehäuse 46 bewegbar.

Um die Öffnung 52 in der oberen Wand 48 des Gehäuses 46 abzudichten, erstreckt sich zwischen einer Rückseite des Außengreifers 54 und einer Innenseite der oberen Wand 48 eine Dichtvorrichtung 56, wie beispielweise ein Balgen.

In der oberen Wand 48 ist ferner eine Absaugöffnung 58 vorgesehen, die mit einer Absaugvorrichtung 60, wie beispielsweise einer Vakuumpumpe in Verbindung steht.

Die Seitenwand 49 des Gehäuses 46 ist von außen gegen die obere Wand 10 des Gehäuses 6 bewegbar, um die Öffnung 11 gegen die Umgebung abzudichten. Zur Verbesserung der Abdichtung ist in der oberen Wand 10 des Gehäuses 6 eine Dichtung 62, wie beispielsweise ein O-Ring, vorgesehen. Natürlich kann auch an bzw. in einer Stirnseite der Seitenwand 49 ein geeignetes Dichtelement vorgesehen sein, um eine Abdichtung zwischen dem Gehäuse 46 und der oberen Wand 10 des Gehäuses 6 vorzusehen.

Wenn die ersten und zweiten Handhabungsvorrichtungen 16, 24, bzw. deren Gehäuse 26 bzw. 46, wie in Fig. 2 dargestellt ist, in Kontakt mit der oberen Wand 10 bewegt sind, wird zwischen den beiden Handhabungsvorrichtungen einen abgedichtete Übergabekammer 64 gebildet. Die Übergabekammer kann über die Absaugöffnung 58 und die Vakuumpumpe 60 abgepumpt werden. Das Volumen der Übergabekammer 64 ist wesentlich kleiner als das Volumen der Unterdruckkammer 8, wodurch beim Öffnen der Übergabekammer 64 zur Unterdruckkammer 8 nur geringe Druckschwankungen Unterdruckkammer auftreten, die durch die Vakuumpumpe 14 rasch ausgeglichen werden. Dies gilt insbesondere dann, wenn die Übergabekammer 64 vor ihrem Öffnen zur Unterdruckkammer 8 über die Vakuumpumpe 60 auf einen zwischen dem Umgebungsdruck und dem in der Unterdruckkammer 8 herrschenden Druck abgepumpt wurde, wie nachfolgend noch näher beschrieben wird.

Fig. 3 zeigt die derzeitig bevorzugte Zusammenfügstation 12, die an der oberen Wand 10 des Gehäuses 6 angebracht ist. Im Bereich der Zusammenfügstation 12 weist die obere Wand 10 des Gehäuses 6 eine Öffnung 66 auf. Die Zusammenfügstation 12 weist ein Unterteil auf, das durch die unter Bezugnahme auf Fig. 2 beschriebene Substrataufnahme 20 gebildet wird. Die Substrataufnahme 20 ist während eines Zusammenfügvorgangs, wie in Fig. 3 dargestellt ist, von innen gegen die obere Wand 10 bewegt. Ein die Öffnung 66 radial umgebendes und zur Unterdruckkammer weisendes Dichtelement 68, wie beispielsweise ein O-Ring, in der oberen Wand 10, sieht eine gute Abdichtung zwischen dem Gehäuse 26 und der oberen Wand 10 vor. Auf der Außenseite der oberen Wand 10 wird ein oberer Teil der Zusammenfügstation 12 gebildet. Dieser obere Teil weist ein Gehäuse 70 mit einem U-förmigen Querschnitt auf. Das Gehäuse 70 besitzt eine obere Wand 72 sowie eine umlaufende Seitenwand 73, welche die Öffnung 66 in der Wand 10 des Gehäuses 6 radial umgibt. Die Seitenwand 73 ist in abgedichteter Weise mit der oberen Wand 10 des Gehäuses 6 verbunden.

In dem Gehäuse 70 ist eine flexible Membran 74 vorgesehen, die den Innenbereich des Gehäuses 70 voll überspannt und hierdurch eine abgeschlossene Luftkammer 75 auf der von der Unterdruckkammer 8 abgewandten Seite der flexiblen Membran 74 bildet.

Die Luftkammer 75 ist über eine Absaugvorrichtung 78 und eine entsprechende Leitung 79 in der oberen Wand 72 des Gehäuses 70 mit Unterdruck beaufschlagbar.

An der Membran 74 ist zur Unterdruckkammer 8 weisend in geeigneter Weise eine Platte 82 angebracht, so daß die Platte 82 mit der flexiblen Membran 74 bewegbar ist.

In der Luftkammer 75 sind Gegenhalter 84 vorgesehen, um eine Bewegung der Membran 74 und der daran angebrachten Platte 82 nach oben, d.h. in die Luftkammer 75 hinein, zu begrenzen.

Über eine Feder 86, die sich zwischen der oberen Wand 72 und der Membran 74 erstreckt, ist die Membran 74 gegen die Gegenhalter 84 vorgespannt. Die Kraft der Feder 86 ist derart ausgelegt, daß sie die Membran bei Druckgleichheit oberhalb und unterhalb der Membran leicht gegen die Gegenhalter 84 zieht, um sie in der in Fig. 3 gezeigten Position zu halten. Natürlich kann auch eine andere Vorspanneinrichtung vorgesehen werden, um die Membran 74 und die daran angebrachte Platte 82 in der in Fig. 3 gezeigten Position zu halten.

Der unterhalb der Membran 74 liegende Bereich bildet gemeinsam mit der Substrataufnahme 20 eine Fügekammer 90. Die Fügekammer 90 kann über eine Absaugvorrichtung 92, wie beispielsweise eine Vakuumpumpe, und eine entsprechende Leitung 93 in der Seitenwand 73 des Gehäuses 70 mit Unterdruck beaufschlagt werden, um den Druck innerhalb der Fügekammer 90 noch unter den Druck in der Unterdruckkammer 8 zu reduzieren.

Die Funktion der Zusammenfügstation 12 wird nun kurz unter Bezugnahme auf Fig. 3 beschrieben. Zunächst wird die Substrataufnahme 20 in die in Fig. 3 gezeigte Position bewegt; um gemeinsam mit dem außen liegenden Gehäuse 70 die Fügekammer 90 zu bilden. Zu diesem Zeitpunkt herrscht in der Fügekammer 90 derselbe Druck wie in der Unterdruckkammer 8. Der Druck in der Luftkammer 75 befindet sich ebenfalls auf dem Druck der Unterdruckkammer oder darunter, um sicherzustellen, daß sich die Membran 74 und die Platte 82 in der in Fig. 3 gezeigten Position befinden. Nun wird der Druck in der Fügekammer 90 über die Absaugvorrichtung 92 noch weiter reduziert. Der Druck in der Luftkammer 75 wird ebenfalls weiter reduziert, sofern dies notwendig ist, um sicherzustellen, daß der Druck in der Fügekammer 90 nicht geringer wird als der Druck in der Luftkammer 75, wodurch die Membran 74 in der in Fig. 3 gezeigten Position gehalten wird.

Wenn der gewünschte Unterdruck in der Fügekammer 90 erreicht ist, der Lufteinschlüsse zwischen den Substraten verhindert, wird der Druck in der Luftkammer 75 kontrolliert auf Umgebungsdruck angehoben. Durch die dabei entstehende Druckdifferenz zwischen den Kammern 90, 75 und den niedrigeren Druck in der Fügekammer 90 wird die Membran 74 mit der daran angebrachten Platte 82 kontrolliert nach unten ausgelenkt, wodurch die Platte zunächst mit dem oberen Substrat 3 in Kontakt kommt, und dieses anschließend gegen das darunter liegende Substrat 4 drückt. Durch die schwimmende Lagerung der Platte 82 an der Membran 74 ergibt sich eine gute Anpassung der Platte 82 an die unter dem Substrat befindliche Auflage, d.h. die untere Wand 28 des Gehäuse 26, so daß über die Substrate hinweg eine gleichmäßige Zusammendrückkraft angelegt wird.

Anschließend wird der Druck in der Kammer 75 wieder verringert, während der Druck in der Fügekammer 90 wieder auf den Druck in der Unterdruckkammer 8 angehoben wird, so daß sich die Membran 74 mit der daran angebrachten Platte 82 in die in Fig. 3 gezeigte, angehobene Position zurückbewegt. Zu dem Zeitpunkt ist der Fügevorgang abgeschlossen. Alternativ könnte die beschriebene Membranstation auch in der Substrataufnahme vorgesehen sein, sodass die Substrate schwimmend gelagert sind und zum Zusammenfügen gegen eine feststehende Platte gedrückt werden.

Anhand der Fig. 1A bis C wird nachfolgend der Betrieb der Vorrichtung 1 zum Zusammenfügen von Substraten näher erläutert.

Zunächst wird die Handhabungsvorrichtung 16 nach oben bewegt, wie durch den Pfeil 100 dargestellt ist. Die beiden Substrataufnahmen 20 werden hierdurch von innen gegen die obere Gehäusewand 10 bewegt, und zwar derart, daß sie die Öffnungen 11 und 66 radial umgeben und von innen abdichten. Nun wird die gegenüber der Umgebung abgedichtete Unterdruckkammer 8 über die Absaugvorrichtung 14 auf einen gewünschten Unterdruck gebracht und im folgenden auf diesem Unterdruck gehalten. Die Bewegung der Substrataufnahmen 20 gegen die Gehäusewand kann auch über eine Relativbewegung zwischen der Platte 17 und den Substrataufnahmen 20 erfolgen. Die Handhabungsvorrichtung 24 wird von außen gegen die obere Wand 10 des Gehäuses 6 in die in Fig. 2 gezeigte Position bewegt, wie durch den Pfeil 102 dargestellt ist, so daß die Öffnung 11 von außen gegen die Umgebung abgedichtet ist. Zwischen dem Gehäuse 26 der Substrataufnahme 20 und dem Gehäuse 46 der Handhabungsvorrichtung 24 wird eine Übergabekammer 64 gebildet, die über die Absaugvorrichtung 60 auf einen Druck entlüftet wird, der zwischen dem Umgebungsdruck und dem Druck in der Unterdruckkammer 8 liegt. Zwei zusammenzufügende Substrate werden von dem Substratträger 51 der Handhabungsvorrichtung 24 an die Susbtrataufnahme 20 übergeben, und zwar derart daß die Substrate vor, während und nach der Übergabe beabstandet voneinander gehalten werden.

Wenn die Substrate in der Substrataufnahme 20 aufgenommen sind, wird die Handhabungsvorrichtung 16 abgesenkt, wie durch den Pfeil 104 in Fig. 1 B dargestellt ist. Dadurch, daß die Handhabungsvorrichtung 24 von außen die Öffnung 11 in der oberen Wand 10 des Gehäuses 6 abdichtet, wird verhindert, daß der Druck in der Unterdruckkammer wesentlich ansteigt. Es muß lediglich eine geringe Druckdifferenz ausgeglichen werden, die dadurch entsteht, daß die Übergabekammer 64 zur Unterdruckkammer 8 geöffnet wird. Aufgrund des wesentlich geringeren Volumens der Übergabekammer 64 bezüglich der Unterdruckkammer 8, und dadurch, daß die Übergabekammer 64 zumindest teilweise abgepumpt wurde, ist der Druck in der Unterdruckkammer jedoch im wesentlichen konstant. In der abgesenkten Position wird die Platte 17 mit den Substrataufnahmen 20 um 180 Grad um die Drehwelle 18 gedreht, wie durch den Pfeil 106 in Fig. 1B dargestellt ist.

Hierdurch wird die, gerade beladene Substrataufnahme 20 unter der Zusammenfügstation 12 positioniert, während die zuvor unterhalb der Zusammenfügstation 12 positionierte Substrataufnahme 20 unter der Öffnung 11 positioniert wird. Die Handhabungsvorrichtung 16 angehoben, wie durch den Pfeil 108 in Fig. 1C dargestellt ist. Die Substrataufnahme 20 mit den beladenen und beabstandet voneinander gehaltenen Substraten wird in die in Fig. 3 gezeigte Position bewegt, und die Substrate werden, wie unter Bezugnahme auf Fig. 3 beschrieben wurde, zusammengefügt.

Zum gleichen Zeitpunkt dichtet die andere Substrataufnahme 20 die Öffnung 11, wie in Fig. 2 gezeigt, von innen ab. Sofern sich in dieser Substrataufnahme ein aus zwei Substraten zusammengefügter optischer Datenträger befindet, kann dieser durch die Handhabungsvorrichtung 24 aufgenommen und abtransportiert werden. Da die Öffnung 11 nun von innen gegenüber der Umgebung abgedichtet ist, ergibt sich kein Druckabfall in der Unterdruckkammer 8, wenn sich die Handhabungsvorrichtung 24 von der Öffnung 11 weg bewegt. Nun können neue Substrate in die Substrataufnahme 20 geladen werden, wie unter Bezugnahme auf Fig. 1A beschrieben wurde.

Aus der obigen Beschreibung ergibt sich deutlich, dass die Unterdruckkammer 8 nur einmal von Umgebungsdruck auf einen vorgegebenen Unterdruck abgepumpt werden muss und dann im wesentlichen konstant auf dem vorgegebenen Unterdruck gehalten werden kann, da die Öffnung 11 in der oberen Wand 10 des Gehäuses 6 immer durch die erste und/oder die zweite Handhabungsvorrichtung abgedichtet ist.

Obwohl die Erfindung anhand bevorzugter Ausführungsbeispiele beschrieben wurde, sei bemerkt, daß sie nicht auf die konkret dargestellten Ausführungsbeispiele beschränkt ist. Insbesondere ist es nicht notwendig, daß die Handhabungsvorrichtung 24 eine Kombination eines Innenlochgreifers und eines Außengreifers aufweist. Vielmehr kann jeder Substratträger eingesetzt werden, der in der Lage ist, die zusammenzufügenden Substrate beabstandet voneinander zu tragen und an die Substrataufnahme 20 zu übergeben. Auch die Form des Zentrier- und Haltestifts 32 der Substrataufnahme 20 kann von der dargestellten Form abweichen. Wesentlich ist nur, daß die Substrate vor ihrem Zusammenfügen beabstandet voneinander gehalten werden. Auch die Form der Zusammenfügstation 12 kann von der dargestellten Form abweichen. Statt einer schwimmend gelagerten Platte 82 kann beispielsweise auch ein nicht-schwimmend gelagerter Stempel verwendet werden, um die Substrate zusammenzufügen. Die Substrate können auch durch die Hubbewegung der Substrataufnahme in Richtung der Zusammenfügstation zusammengefügt werden. In diesem Fall würde die Fügekammer entfallen und die Zusammenfügstation würde nur ein geeignetes Gegenlager für die Substrataufnahme vorsehen. Die erfindungsgemäße Vorrichtung ist insbesondere für die Herstellung herkömmlicher optischer Datenträger, wie beispielsweise CD's, DVD's und DVR's geeignet. Sie ist aber auch für neue Speichermedien, wie beispielsweise FMD's geeignet, die in einer Vielzahl von Schichten fluoreszierende Medien enthalten. Ferner ist es nicht notwendig, daß die Handhabungsvorrichtungen jeweils ein Gehäuse mit U-förmigen Querschnitt aufweisen. Vielmehr können die Handhabungsvorrichtungen auch eine flache Abdeckplatte aufweisen, wobei die erforderliche Übergabekammer durch die Dicke der oberen Wand und/oder daran angebrachte Stege gebildet wird.

## Patentansprüche

1. Verfahren zum Zusammenfügen von wenigstens zwei Substraten zu einem Datenträger, in einer Unterdruckkammer, die wenigstens eine Öffnung zum Ein- und/oder Ausgeben von Substraten aufweist, mit folgenden Verfahrensschritten:
- Abdichten der Öffnung gegenüber der Umgebung;
- Abpumpen der Unterdruckkammer;
- Bilden einer Übergabekammer zwischen einer in der Unterdruckkammer angeordneten ersten Handhabungsvorrichtung, und einer außerhalb der Unterdruckkammer angeordneten zweiten Handhabungsvorrichtung durch jeweiliges Abdichten der Öffnung der Unterdruckkammer, wobei die Übergabekammer ein kleineres Volumen als die Unterdruckkammer aufweist;
- Übergeben der Substrate in der Übergabekammer von der zweiten Handhabungsvorrichtung zur ersten Handhabungsvorrichtung,
wobei die Übergabekammer vor und/oder während der Substratübergabe auf einen Druck abgepumpt wird, der über dem der Unterdruckkammer liegt;
- Transportieren der Substrate mit der ersten Handhabungsvorrichtung zu einer Zusammenfügstation in der Unterdruckkammer, und zwar bei durch die zweite Handhabungsvorrichtung abgedichteter Unterdruckkammer;
- in Kontakt bringen der ersten Handhabungsvorrichtung mit der Zusammenfügstation zum Bilden einer Fügekammer;
- Abpumpen der Fügekammer auf einen Druck, der unter dem Druck in der Unterdruckkammer liegt;
- Zusammenfügen der Substrate in der Zusammenfügstation.

2. Verfahren nach Anspruch 1, **dadurch gekennzeichnet, daß** die erste Handhabungsvorrichtung wenigstens zwei Substrataufnahmen aufweist, wobei eine Substrataufnahme die Substrate beim Zusammenfügen trägt, und die andere Substrataufnahme die Öffnung der Unterdruckkammer von innen gegen die Umgebung abdichtet.

3. Vorrichtung (1) zum Zusammenfügen von wenigstens zwei Substraten (3, 4) zu einem Datenträger, mit einer Unterdruckkammer (8), die wenigstens eine Öffnung (11) zum Eingeben und/oder Ausgeben von Substraten aufweist, einer Vorrichtung zum Abpumpen der Unterdruckkammer (8), eine Zusammenfügstation (14) in der Unterdruckkammer (8), einer ersten Handhabungsvorrichtung (16) zum Tragen und Transportieren der Substrate (3, 4) in der Unterdruckkammer (8), die in eine die Öffnung (11) abdichtende Position bewegbar ist, und einer zweiten Handhabungsvorrichtung (24) zum Tragen und Transportieren der Substrate (3, 4) außerhalb der Unterdruckkammer (8), die in eine die Öffnung (11) abdichtende Position bewegbar ist, wobei die Handhabungsvorrichtungen (16, 24) in ihren abdichtenden Positionen eine im wesentlichen geschlossene Übergabekammer (64) mit einem Volumen bilden, das kleiner ist als das Volumen der Unterdruckkammer (8), wobei eine Vorrichtung zum Abpumpen der Übergabekammer vorgesehen ist, wobei die erste Handhabungsvorrichtung (16) zum Bilden einer Fügekammer in Kontakt mit der Zusammenfügstation (14) bewegbar ist, und wobei eine Vorrichtung zum Abpumpen der Fügekammer vorgesehen ist.

4. Vorrichtung (1) nach Anspruch 3, **dadurch gekennzeichnet, daß** die erste Handhabungsvorrichtung (16) wenigstens zwei Substrataufnahmen (20) aufweist.

5. Vorrichtung (1) nach Anspruch 4, **dadurch gekennzeichnet, daß** die Substrataufnahmen jeweils ein Gehäuse (26) mit U-förmigem Querschnitt aufweisen.

6. Vorrichtung (1) nach einem der Ansprüche 3 bis 5, **dadurch gekennzeichnet, daß** die zweite Handhabungsvorrichtung (24) ein Gehäuse (46) mit U-förmigem Querschnitt aufweist.

7. Vorrichtung nach Anspruch 6, **gekennzeichnet durch** einen im Gehäuse bewegbaren Substratträger (51).

8. Vorrichtung (1) nach einem der Ansprüche 3 bis 7, **dadurch gekennzeichnet, daß** die ersten und zweiten Handhabungsvorrichtungen (16, 24) die Substrate (3, 4) vor ihrem Zusammenfügen beabstandet tragen.

9. Vorrichtung nach einem der Ansprüche 3 bis 8, **gekennzeichnet durch** wenigstens eine weitere Öffnung zum Eingeben und/oder Ausgeben von Substraten, wobei die erste Handhabungsvorrichtung in eine die weitere Öffnung abdichtende Position bewegbar ist, und wenigstens drei Substrataufnahmen aufweist; und wobei wenigstes eine weitere Handhabungsvorrichtung zum Tragen und Transportieren der Substrate außerhalb der Unterdruckkammer vorgesehen ist, die in eine die weitere Öffnung abdichtende Position bewegbar ist.

## Claims

1. Method of joining together at least two substrates to form a data carrier, in an underpressure chamber which has at least one opening for putting in and/or taking out substrates, with the following method steps:
- sealing of the opening relative to the environment;
- evacuating the underpressure chamber;
- forming a transfer chamber between a first handling device arranged in the underpressure chamber and a second handling device arranged outside the underpressure chamber by sealing off the opening of the underpressure chamber each time, wherein the transfer chamber has a smaller volume that the underpressure chamber;
- transferring the substrates in the transfer chamber from the second handling device to the first handling device, wherein the transfer chamber before and/or during the substrate transfer is evacuated to a pressure which lies above that of the underpressure chamber;
- transporting the substrates by the first handling device to a joining station in the underpressure chamber and in particular with the underpressure chamber sealed off by the second handling device;
- bringing the first handling device into contact with the joining station for formation of a joining chamber;
- evacuating the joining chamber to a pressure which lies above the pressure in the underpressure chamber; and
- joining together the substrates in the joining station.

2. Method according to claim 1, **characterised in that** the first handling device comprises at least two substrate mounts, wherein one substrate mount carries the substrates during joining together and the other substrate mount seals off the opening in the underpressure chamber from the inside relative to the environment.

3. Device (1) for joining together at least two substrates (3, 4) to form a data carrier, with an underpressure chamber (8) which has at least one opening (11) for putting in and/or taking out substrates, a device for evacuating the underpressure chamber (8), a joining station (14) in the underpressure chamber (8), a first handling device (16) for carrying and transporting the substrates (3, 4) in the underpressure chamber (8), which device is movable into a position sealing the opening (11), and a second handling device (24) for carrying and transporting the substrates (3, 4) outside the underpressure chamber (8), which device is movable into a position sealing the opening (11), wherein the handling devices (16, 24) in their sealing positions form a substantially closed transfer chamber (64) with a volume which is smaller than the volume of the underpressure chamber (8), wherein a device for evacuating the underpressure chamber is provided, wherein the first handling device (16) is movable into contact with the joining station (14) for forming a joining chamber and wherein a device for evacuating the joining chamber is provided.

4. Device (1) according to claim 3, **characterised in that** the first handling device (16) comprises at least two substrate mounts (20).

5. Device (1) according to claim 4, **characterised in that** the substrate mounts each comprise a respective housing (26) with a U-shaped cross-section.

6. Device (1) according to one claims 3 to 5, **characterised in that** the second handling device (24) comprises a housing (46) with a U-shaped cross-section.

7. Device according to claim 6, **characterised by** a substrate carrier (51) movable in the housing.

8. Device (1) according to one of claims 3 to 7, **characterised in that** the first and second handling devices (16, 24) carry the substrates (3, 4) at a spacing prior to joining together thereof.

9. Device according to any one of claims 3 to 8, **characterised by** at least one further opening for putting in and/or taking out substrates, wherein the first handling device is movable into a position sealing the further opening and comprises at least three substrate mounts and wherein at least one further handling device for carrying and transporting the substrates outside the underpressure chamber is provided, which device is movable into a position sealing the further opening.

## Revendications

1. Procédé destiné à l'assemblage d'au moins deux substrats pour former un support de données, dans une chambre à dépression, qui comporte au moins une ouverture pour l'admission et/ou l'évacuation des substrats, comprenant les étapes suivantes:
- étanchéité de l'ouverture par rapport à l'environnement;
- aspiration de l'air hors de la chambre à dépression;
- formation d'une chambre de transfert entre un premier dispositif de manutention, agencé dans la chambre à dépression, et un deuxième dispositif de manutention, agencé à l'extérieur de la chambre à dépression, en rendant étanche l'ouverture de la chambre à dépression, la chambre de transfert possédant un volume inférieur à celui de la chambre à dépression;
- transfert des substrats dans la chambre de transfert à partir du deuxième dispositif de manutention vers le premier dispositif de manutention, l'air étant aspiré hors de la chambre de transfert, avant et/ou pendant le transfert des substrats, jusqu'à atteindre une pression qui est supérieure à celle de la chambre à dépression;
- transport des substrats avec le premier dispositif de manutention vers un poste d'assemblage, à l'intérieur de la chambre à dépression, à savoir en présence d'une chambre à dépression rendue étanche par le deuxième dispositif de manutention;
- mise en contact du premier dispositif de manutention avec le poste d'assemblage pour former une chambre d'assemblage;
- aspiration de l'air hors de la chambre d'assemblage jusqu'à une pression inférieure à la pression dans la chambre à dépression;
- assemblage des substrats dans le poste d'assemblage.

2. Procédé selon la revendication 1, **caractérisé en ce que** le premier dispositif de manutention comporte au moins deux éléments de réception, l'un des éléments de réception portant les substrats pendant l'assemblage et l'autre élément de réception rendant étanche de l'intérieur l'ouverture de la chambre à dépression par rapport à l'environnement.

3. Dispositif (1) destiné à l'assemblage d'au moins deux substrats (3, 4) pour former un support de données, comprenant une chambre à dépression (8), qui comporte au moins une ouverture (11) pour l'admission et/ou l'évacuation des substrats, un dispositif destiné à aspirer l'air hors de la chambre à dépression (8), un premier dispositif de manutention (16), qui est destiné à porter et transporter les substrats (3, 4) à l'intérieur de la chambre à dépression (8) et qui peut être déplacé dans une position assurant l'étanchéité de l'ouverture (11), et un deuxième dispositif de manutention (24), qui est destiné à porter et transporter les substrats (3, 4) à l'extérieur de la chambre à dépression (8) et qui peut être déplacé dans une position assurant l'étanchéité de l'ouverture (11), dans lequel dispositif les dispositifs de manutention (16, 24) forment dans leurs positions d'étanchéité une chambre de transfert (64) sensiblement fermée avec un volume inférieur au volume de la chambre à dépression (8), dans lequel il est prévu un dispositif pour aspirer l'air hors de la chambre de transfert, dans lequel le premier dispositif de manutention (16) est amené en contact avec le poste d'assemblage (12) pour former une chambre d'assemblage et dans lequel il est prévu un dispositif pour aspirer l'air hors de la chambre d'assemblage.

4. Dispositif (1) selon la revendication 3, **caractérisé en ce que** le premier dispositif de manutention (16) comporte au moins deux éléments de réception (20).

5. Dispositif (1) selon la revendication 4, **caractérisé en ce que** les éléments de réception (20) sont formés chacun par un boîtier (26) avec une section en forme de U.

6. Dispositif (1) selon l'une quelconque des revendications 3 à 5, **caractérisé en ce que** le deuxième dispositif de manutention (24) est formé par un boîtier (46) avec une section en forme de U.

7. Dispositif selon la revendication 6, **caractérisé par** un porte-substrat (51) mobile dans le boîtier (46).

8. Dispositif (1) selon l'une quelconque des revendications 3 à 7, **caractérisé en ce que** le premier et le deuxième dispositif de manutention (16, 24) portent les substrats à distance l'un de l'autre avant leur assemblage.

9. Dispositif selon l'une quelconque des revendications 3 à 8, **caractérisé par** une ouverture supplémentaire destinée à l'admission et/ou à l'évacuation des substrats, le premier dispositif de manutention étant mobile dans une position rendant étanche l'ouverture supplémentaire et comportant au moins trois éléments de réception; et dans lequel au moins un autre dispositif de manutention est prévu pour porter et transporter les substrats à l'extérieur de la chambre à dépression, lequel est mobile dans une position assurant l'étanchéité de l'ouverture supplémentaire.
